# EUROPEAN PATENT APPLICATION

(11) **EP 1 853 035 A1**
(43) Date of publication of application: **07.11.2007**
(21) Application number: 07000204.3
(22) Date of filing: 05.01.2007
(51) Int. Cl.: H04L 29/06

(54) **Switching network employing server quarantine functionality**

(30) Priority: 05.05.2006 US 429477; 05.05.2006 US 429478; 23.06.2006 US 474033; 20.07.2006 US 491052; 18.08.2006 US 506661
(71) Applicant: Broadcom Corporation, Irvine, CA 92617 (US)
(72) Inventor: Bennett, James D., San Clemente CA 92672 (US)
(74) Representative: Jehle, Volker Armin

(57) **Abstract**

In a communication infrastructure, an intermediate node supports delivery of packets from source devices to destination devices if the source device contains no notorious content (e.g., malware or illegal content, services or distribution). The intermediate node, e.g., a switch, router, access point, bridge or gateway, contains a plurality of predefined templates and corresponding quarantine service functions. By comparing packets received with the plurality of predefined templates and associated logic, the intermediate node identifies notorious source devices such as a notorious server and notorious content. Templates target at least a portion of one or more of a domain name, IP address or URL, for example. Once identified, local and/or remote quarantine service functionality attempts to neutralize, warn, remove and/or block the notorious content at both the source and destination devices. Warnings may include human challenges to prevent malware override.

## Description

### SPECIFICATION

### CROSS REFERENCE TO RELATED APPLICATIONS

The present application is a continuation-in-part of:

Utility Application Serial No. 11/429,477, filed on May 5, 2006, and entitled "PACKET ROUTING WITH PAYLOAD ANALYSIS, ENCAPSULATION AND SERVICE MODULE VECTORING" (BP5390);

Utility Application Serial No. 11/429,478, filed on May 5, 2006, and entitled "PACKET ROUTING AND VECTORING BASED ON PAYLOAD COMPARISON WITH SPATIALLY RELATED TEMPLATES" (BP5391);

Utility Application Serial No. 11/491,052, filed on July 20, 2006, and entitled "SWITCHING NETWORK EMPLOYING VIRUS DETECTION" (BP5457); and

Utility Application Serial No. 11/474,033, filed on June 23, 2006, and entitled "INTERMEDIATE NETWORK NODE SUPPORTING PACKET ANALYSIS OF ENCRYPTED PAYLOAD" (BP5458), the complete subject matter of all of these applications hereby incorporated herein by reference in its entirety.

The present application is related to Utility Application Serial No. 11/xxx,xxx filed on even date herewith, and entitled "SWITCHING NETWORK EMPLOYING ADWARE QUARANTINE TECHNIQUES" (BP5524), the complete subject matter of which is incorporated herein by reference in its entirety.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

### 1. Field of the Invention

This invention generally relates to communication infrastructures, and, more particularly, to switching node operations in a packet switched communication network.

### 2. Related Art

Internet end point devices utilize Internet networks that include network nodes, to exchange audio, video and data packets, which in general is unrestrained. An Internet infrastructure typically includes network nodes such as routers, switches, packet switched exchanges, access points and Internet service provider's networks (ISPN), Internet communication pathways and end point devices. The end point devices include personal or laptop computers, servers, set top boxes, handheld data/communication devices and other client devices, for example. End point devices often, in such unrestrained environment, become target of malware codes that includes virus and adware. Further, end point devices also become, intentionally or not, sources of such malware codes. Often, once infected, malware repeatedly infect Internet infrastructure by replicating in end point devices without the knowledge of the users.

However, often, end point devices are typically incapable of eliminating such packets or packet flow. For example, many annoying advertisement related popup windows deceptively make users click on wrong buttons without being aware of the fact that they infect end point devices with variety of undesirable codes. These undesirable codes, adware as they are known, transfer personal data to unknown servers, which may be misused. In other cases, users of end point devices install virus detection, quarantining, and/or removal software packages. Users often purchase multiple virus processing packages as current packages often fail to address the ever-increasing list of viruses. Although sometimes free, most are expensive especially considering the multiple package burden.

Further limitations and disadvantages of conventional and traditional approaches will become apparent to one of ordinary skill in the art through comparison of such systems with the present invention.

### BRIEF SUMMARY OF THE INVENTION

The present invention is directed to apparatus and methods of operation that are further described in the following Brief Description of the Drawings, the Detailed Description of the Invention, and the Claims.

In accordance with the present invention, a communication infrastructure that communicates a plurality of packets from a source end point device having a source address to a destination end point device having a destination address, consisting a communication pathway with plurality of switching devices, plurality of predefined templates and associated logic and plurality of quarantine service functions. The source end point device delivers a packet to the first of the plurality of switching devices, the packet comprising the source address and destination address. The first of the plurality of switching devices identifies the source address as the source address that sources malware by comparing the packet with the plurality of predefined templates, and applies the associated logic and performs selected quarantine service function processing that is indicated in the associated logic. Finally, the first of the plurality of switching devices performs selected quarantine service function processing that is indicated in the associated logic. The source address may represent one or more a home-domain or sub-domain path files, all files on a server or on a cluster of servers.

In accordance with the present invention, a network node circuitry in an Internet network that communicates a plurality of packets from a source end point device having a source address to a destination end point device having a destination address, consisting interface circuitry, storage and processing circuitry that is communicatively coupled to the interface circuitry. The processing circuitry identifies the source address as the source address that sources malware by comparing the first packet with at least one predefined template and applies associated logic and performs selected quarantine service function processing that is indicated in the associated logic.
According to an aspect of the invention, a communication infrastructure is provided that routes a packet from a source device toward a destination device, the source device having a domain name and a current network address, the communication infrastructure comprising:
a domain name server that associatively stores the domain name and the current network address of the source end point device;
an intermediate routing node;
a plurality of templates stored on the intermediate routing node, a first of the plurality of templates being updated from the associative storage of the domain name server using the domain name of the source device, the first of the plurality of templates targeting the current network address of the source device;
a quarantine service function;
the intermediate routing node, after receiving the packet originating from the source device, successfully matches the packet with the first of the plurality of templates; and
the intermediate routing node responds to the successful matching by triggering the quarantine service function.
Advantageously, the source device comprising a notorious server, and the first of the plurality of templates targeting the notorious server by targeting the current network address.
Advantageously, the source device is a server cluster.
Advantageously, the quarantine service function delivers a human challenge.
Advantageously, the quarantine service function delivers a warning message.
Advantageously, the source device offers notorious content and the quarantine service function offers to neutralize the notorious content.
Advantageously, the source device offers notorious content and the quarantine service function offers to remove the notorious content.
Advantageously, the quarantine service function is located at least in part within the intermediate routing node.
Advantageously, the quarantine service function is located at least in part within a support server.
Advantageously, the destination device supports the quarantine service function.
According to an aspect of the invention, an intermediate routing node is provided in a communication infrastructure that supports packet switched communication from a source device toward a destination device, the source device having a network identifier, the source device having notorious content, the communication infrastructure comprising:
a communication interface;
storage containing a plurality of templates;
a first of the plurality of templates targeting at least a portion of the network identifier;
processing circuitry, coupled to the storage and to the communication interface, that, during a comparison of a packet received from the source device via the communication interface; matches the packet with the first of the plurality of templates; and
the processing circuitry, at least in part based on the matching, responds by triggering a quarantine function.
Advantageously, the intermediate routing node comprising a router.
Advantageously, the intermediate routing node comprising an access point.
Advantageously, the processing circuitry responds by triggering the quarantine function based on matching both the first of the plurality of templates and a second of the plurality of templates, the second of the plurality of templates targeting at least a portion of a uniform resource locator.
Advantageously, the processing circuitry responds by triggering the quarantine function based on matching both the first of the plurality of templates and a second of the plurality of templates, the second of the plurality of templates targeting at least a portion of a name of the notorious content.
Advantageously; the processing circuitry responds by triggering the quarantine function based on matching both the first of the plurality of templates and a second of the plurality of templates, the second of the plurality of templates targeting at least a portion of a directory path to the notorious content.
According to an aspect of the invention, a method is provided performed by an intermediate network node in a packet switched communication pathway, the intermediate network node being communicatively coupled between a source device and a destination device, the source device having a network identifier and notorious content, the method comprising:
receiving a packet that contains the network identifier;
comparing the packet with a plurality of templates;
matching at least a portion of the packet with a first of the plurality of templates;
responding, based at least in part on the matching, by triggering a quarantine function.
Advantageously, the method further comprises executing at least a portion of the quarantine function locally.
Advantageously, the triggering of the quarantine function comprising sending a request to a support server to execute at least a portion of the quarantine function.
Advantageously, the method further comprises updating the first of the plurality of templates based on interaction with a domain name server.
Advantageously; the method further comprises matching at least a portion of the packet with a second of the plurality of templates, and wherein the responding by the triggering of the quarantine function is based on the match with the first of the plurality of templates and the match with the second of the plurality of templates.
Advantageously, the first of the plurality of templates targets the network identifier.
Advantageously, the first of the plurality of templates targets at least a portion of a uniform resource locator associated with the notorious content.

Features and advantages of the present invention will become apparent from the following detailed description of the invention made with reference to the accompanying drawings.

### BRIEF DESCRIPTION OF THE DRAWINGS

**FIG. 1** is a schematic block diagram illustrating an embodiment of a communication infrastructure built in accordance with the present invention, wherein intermediate packet pathway nodes interrupt routing of packets that are sourced by a home-domain path address, sub-domain path address, an entire server or a cluster of servers known to source malware and perform quarantine service function processing in conjunction with external servers and/or server clusters;

**FIG. 2** is a schematic block diagram illustrating functionality of the end point devices and the intermediate packet pathway nodes of the communication infrastructure of **FIG. 1,** according to the present invention;

**FIG. 3** is a schematic block diagram of an embodiment of the communication infrastructure of **FIG. 1**, illustrating further detail of the end point devices, intermediate packet pathway nodes and sever or server clusters;

**FIG. 4** is a schematic block diagram illustrating a network node (switch/router/ISPN/AP) constructed in accordance with the embodiments of **FIGs. 1** and **3** of the present invention;

**FIG. 5** is another schematic block diagram illustrating a network node (switch/router/ISPN/AP) not equipped with components of present invention interacting with a neighboring node to accomplish quarantine service function processing;

**FIG. 6** is a schematic block diagram illustrating a router constructed in accordance with the embodiments of **FIGs. 1** and **3** of the present invention;

**FIG. 7** is a schematic block diagram illustrating end point devices (servers and/or clients) constructed in accordance with the embodiments of **FIGs. 1** and **3** of the present invention;

**FIG. 8** is a flowchart illustrating general flow of functionality of network devices of **FIGs. 4, 5** and **6;**

**FIG. 9** is a flowchart illustrating functionality of network device of **FIGs. 4, 5** and **6,** in detail; and

**FIG. 10** is a flowchart illustrating functionality of malware identification circuitry, in network device of **FIGs. 4, 5** and **6**.

### DETAILED DESCRIPTION OF THE INVENTION

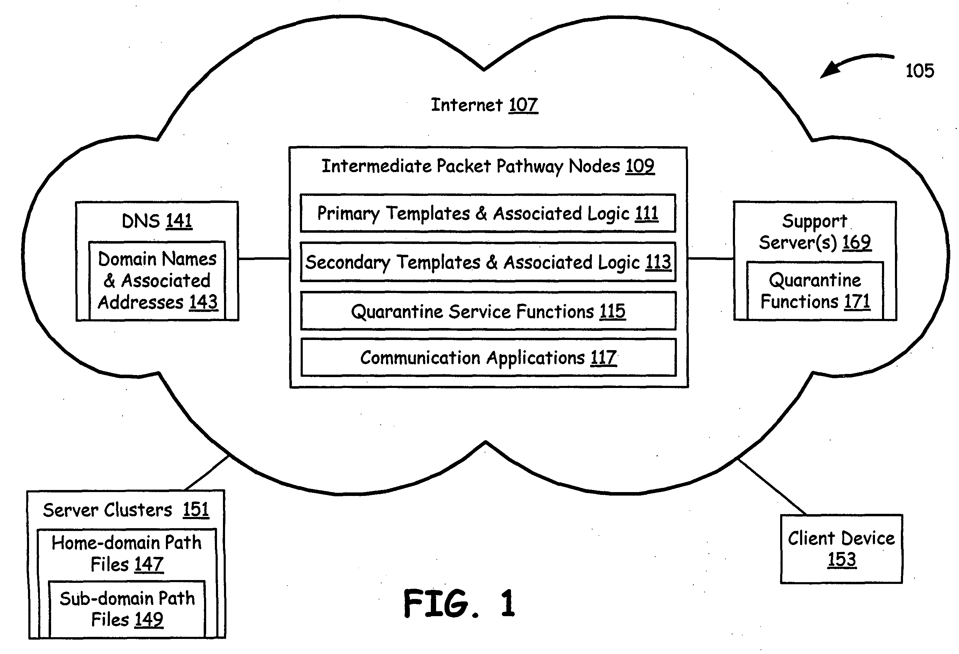

**FIG. 1** is a schematic block diagram illustrating an embodiment of a communication infrastructure built in accordance with the present invention, wherein an intermediate packet pathway node detects routing attempts of packets that are related to a known source of: a) malware; b) illegal content; or 3) illegal distribution. Upon detecting any such packets, the intermediate packet pathway nodes 109 invoke quarantine service function. Quarantine service functionality may be contained within one or more of the intermediate packet pathway node, an external support server or server cluster, and the source and destination devices. No matter where stored, the quarantine functionality selectively includes, but is not limited to, sending messages to the source and/or destination device, sending the source and/or destination device "human challenge" mechanisms, and interrupting or aborting the delivery of the underlying packets. As used herein, the term "malware" includes unwanted or inappropriate adware or virus files, for example. "Illegal content" include content banned by laws of a state or country such as gambling, child pornography, etc. "Illegal distribution" relates to the unauthorized distribution of otherwise legal content, such as unauthorized distribution of copyrighted materials. Together, malware, illegal content, and content sent via illegal distribution are referred to herein as "notorious content." Known and often repeated sources of malware, illegal content or illegal distribution are referred to herein as "notorious sources". Also herein, the term "content" is also meant to include "services", such that "notorious content" includes "notorious services."

Malware may also comprise the program codes of a virus, worm, and Trojan horses or may simply be the unwanted ad ware. These malware codes are characterized by their ability to disrupt normal functioning of client device 153 such as slowing down the device, annoying the users by unwanted popup and advertisements, channeling private information outside of the device, changing user set characteristics of the device, changing the registry etc.

To identify a notorious source, an intermediate packet pathway node employs a plurality of templates that are compared to each packet received. Some templates attempt to identify a single notorious server, while others attempt to identify a cluster of notorious servers. Further templates target a single file based on, for example, a URL (Uniform Resource Locator) such as an HTTP (HyperText Transport Protocol) IP address, pathway and file name or FTP (File Transfer Protocol) address, directory and file name. Templates that target such a file are referred to herein as a "pathed file templates" or "templates targeting a pathed file." Other types of templates attempt to snare all files in a given pathway, e.g., all files in an FTP directory or all files in a particular HTTP path. Herein, such templates are referred to as a "path template" or a "template targeting a path." Likewise, some templates target all files in a given pathway including all sub-paths or sub-directories. These templates are referred to herein as a "sub-path templates" or a "template targeting a sub-path."

Various protocols (e.g., FTP and HTTP) each use a sequence of steps to establish a connection between one device and another, e.g., between a source and destination device such as a server and client. As part of these sequences, packets identifying such URL's are those that templates often target. Similarly, to identify an IP address when only a domain name is known, domain name servers are contacted using a UDP (User Datagram Protocol). Such packets sent to domain name servers are also targeted so that templates tailored to match a domain name can be successfully matched. Other templates are constructed to target a current IP address (in cases where the IP address changes from time to time), which requires updating at least periodically through accessing the domain server using a domain name.

Templates are created in at least three ways. First, a system administrator may create the template through manual interaction. Second, the template can be created automatically (with or without a system administrator's intervention) based on the detection of notorious content in prior packet payloads. Third, an independent party (perhaps one representing a trusted virus detection company, police or copyright holder) might interact to add templates (with or without a system administrator's intervention, depending on the configuration). For example, a known gambling web site that operates legally outside a country, might be operating illegally when the destination address of outgoing packets (i.e., address of the destination device) fall within a particular country. To quarantine such illegal operation, authorities in that particular country may directly enter targeted templates via an Internet based computer or may request that a system administrator do so. Targeted templates may include, for example, the domain name of the gambling site, the IP (Internet Protocol) address of the gambling site, and a range of IP addresses used by client devices within that particular country. An intermediate node through comparison of the IP address of the gambling site with the source address or destination address in a packet and subsequent comparison of the source address or destination address of the client device range can conclude that quarantine functionality is needed. Similarly, for example, a known virus that attempts to distribute itself might be repeatedly detected by matching a template within an intermediate packet pathway node. After repeatedly attempting to warn and otherwise help a user of a client device or an administrator of a server, the client device, the server or a pathway associated therewith may be quarantined, avoiding having to match packet payload content templates. Other notorious content and sources can be similarly identified and quarantined.

Specifically, a plurality of intermediate packet pathway nodes (alternatively, intermediate nodes or intermediate routing nodes) 109 in an Internet network 107 identify notorious servers and notorious content. In some cases such as where the server provides no valuable service, it may be identified as a notorious server, resulting in the addition of two primary templates within primary templates & associated logic 111. The first of these templates being targeted to match such server's domain name. The second begin targeted to match the IP address of such server. With these templates added, any of the intermediate packet pathway nodes 109 that matches either template with a received packet will respond by triggering a local or remote quarantine service function 115 or 171.

A typical example might involve sending, by a browser on a client device 153, a UDP packet to a domain name server (DNS) 141. Within the UDP packet, a notorious server, e.g., a server within a server cluster 151 might be identified by domain name. Such packets often comprise requests for an IP address based on a domain name. The DNS 141 typically responds to these packets by looking up the current registered IP address using the domain name. Domain names and corresponding current IP addresses 143 are associatively stored by the DNS 141. However, when a UDP packet that identifies a notorious server's domain name is received by one of the intermediate packet pathway nodes 109, a template targeting such domain name matches and a quarantine service function is triggered.

Another example might involve sending, by either a client device 153 or a notorious server, a packet that is received by one the intermediate packet pathway nodes 109. Such one of the intermediate packet pathway nodes 109 matches the packet's source or destination address with the current IP address of the notorious server, and responds by invoking a local or remote quarantine function. Because current IP addresses often change, all templates that rely on current IP addresses are periodically updated through interaction with the DNS 141 using the corresponding domain name.

When a server offers notorious content yet has not been designated as being a notorious server (e.g., where a server offers other valuable content or has no control over the associated content provider), in addition to matching at least one of the two templates mentioned above, further templates relating to the name and location of the notorious content within such server are employed. Such templates target directory paths, file names, directory content, and sub-directory content. A typical example might involve a TCP or FTP request using a URL. A client device 153 making such a request might identify: 1) the IP address of the server; 2) the directory path on the server to the target content; and 3) the notorious content file name. Any of the intermediate packet pathway nodes 109 that receive such packet will find a match with the IP address (which would normally not be enough by itself in this case to trigger quarantine functionality) and, more importantly, also match at least a portion of one or more of the directory path to and the file name of the notorious content. Together, both matches cause the receiving one of the intermediate packet pathway nodes 109 to trigger the local or remote quarantine functionality.

In cases where templates are created to target notorious content on a non-notorious server, a target may be the actual name of the notorious content (a file name or service name). The template (or other associated templates) may also target the full directory path. In cases where there are many files/service paths flowing from a common root path, a template may merely target the root and be sure to snare any content falling anywhere in the root path or in any sub-directory there below. Wild card characters often associated with searching, e.g., "*" or "?", are also available for use in template construction. Primary and secondary templates and their associated logic can be constructed in many ways adequately to identify an overall conclusion that quarantine functionality is warranted.

As used herein, a source address may represent home-domain path files 147, sub-domain path files 149, and files in an entire server or a cluster of servers. That is, the source address, in entirety or in portion, represents root of an addressing tree structure, or branches of the addressing tree structure that help identify the home-domain path files 147, sub-domain path files 149, files in an entire server or a cluster of servers. The server 151 may generate server pages on the fly or deliver pre-constructed server pages and files upon request, and may also use malware to push unwanted files, pages or other notorious content to a client system via the network.

After identifying a notorious server or notorious content, the intermediate packet pathway nodes 109 (intermediate nodes, hereafter) trigger local and/or remote quarantine service functionality. Such functionality may be custom designed for a particular notorious server or notorious content, or generally designed to service one or all types of notorious servers and notorious content. Typical quarantine functionality involves: 1) temporarily or permanently interrupting the packet deliver; 2) communicating with the intended recipient of the notorious content; 3) communicating with the notorious server or server offering the notorious content; 4) otherwise neutralizing or disabling notorious content when possible (or at least offering to do so). Such communications typically include: a) a human challenge mechanism to prevent any associated malware from hijacking the user interface and hiding the communication; b) a warning message; c) identify the nature of the notorious content or notorious server; d) offer to cleanse anything related to the notorious content or notorious server from the client or server system; and e) offer to immunize or otherwise block, e.g., firewall etc., the client or server system.

In applying the quarantine service functions, the intermediate nodes 109 may take assistance of the support servers 169, by vectoring the packets with the source address to the support servers 169 for remote quarantine processing. The support servers 169 may apply the quarantine functionality independently or with support from the intermediate nodes 109. The intermediate nodes 109 determine whether to apply local and/or remote quarantine functionality by applying the logic associated with the triggers. The client device 151 may also assist in the quarantine process. For example, functionality may be built within a web browser or within another piece of trusted program code running on the client device 151 that supports interaction with quarantine service functionality within the intermediate nodes 109 and the support servers 169. Such interaction includes, for example, receiving and displaying quarantine messages and human challenges, and assisting in the cleaning and firewall application in the client device 151.

The intermediate nodes 109 may be any among many variety of switching devices that routes a packet from the server 151 to the client device 153. For example, the intermediate nodes 109 may be an access point, a router or packet switching device. That is, the routing pathway between the end point devices may consist of personal access points, service provider's access points, other service provider equipment, and plurality of backbone nodes, all of which are represented by the intermediate nodes 109.

In most embodiments of the present invention, the intermediate nodes 109 perform a series of activities. First, the intermediate nodes 109 attempt to identify notorious servers and notorious content. Second, the intermediate nodes 109 attempt to prevent client device 153 from being adversely affected by the notorious content. Third, for adversely affected (and often infected) client devices, the intermediate nodes 109 attempt to remove the adverse affect. Fourth, the intermediate nodes 109 interrupt the free flow of packets related to notorious servers or to notorious content. Lastly, the intermediate nodes 109 attempt to remove the notorious content from the server system.

Local and/or remote quarantine service functionality offers assistance to the server 151 in removing notorious content, e.g., removing virus or malware files or removing all files in from the home-domain path files 147, sub-domain path files 149, and files in an entire server or a cluster of servers. Similar offers to assist are delivered to the client device 153. To remove or neutralize some notorious content, separate applications may be written that are offered and downloadable through the communications from the quarantine service. In other situations, textual instructions are given so that a user or system administrator can carry out the removal or neutralization process. As a part of quarantine service function processing, the intermediate nodes 109 may send messages, with or without challenge mechanism to the user, to the server 151 and client device 153. These messages may include information, warnings, interrupting actions taken and assistance regarding the malware or other notorious content, which may be presented to the users of the server 151 and the client device 153 in the form of popup assisted by a browser or an operating system.

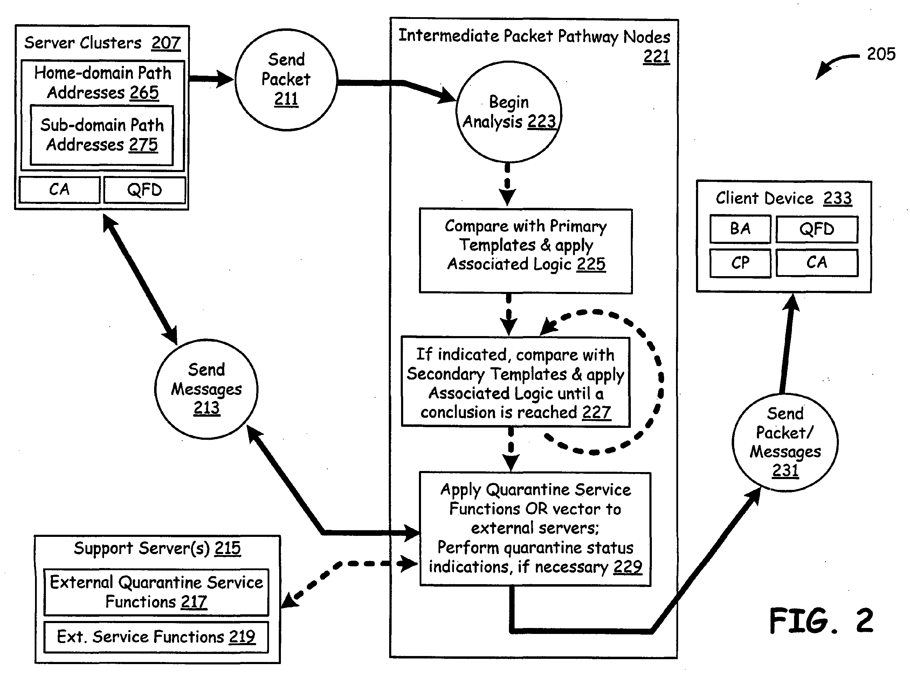

To identify source address(es) that are known to source malware, the intermediate nodes 109 contain primary templates and associated logic 111, secondary templates and associated logic 113. The primary and secondary templates may contain bit sequences that recognize the source address that represents the home-domain path files 147, sub-domain path files 149, files in an entire server or a cluster of servers in the form of domain names, IP addresses, DNS handle (i.e., a "domain name") or filenames, in a database, and these templates help identify the source address. With each of these templates, an associated logic exists that in effect directs the packets to one or more of quarantine service functions 115, or to external quarantine service functions 171 which may exist at the support server 169. Besides primary templates and associated logic 111, secondary templates and associated logic 113, quarantine service functions 115, the intermediate nodes 109 also contain communication applications 117 that generate and present messages with human challenge mechanism in the screens of server 151 and client device 153. A more detailed description of one embodiment of processing performed by the modules 111, 113, 115, 117 and 171 can be found with reference to **FIG. 2**. It may be noted that the support servers 169 shown may represent a server communicatively coupled to the intermediate nodes 109, residing at the same premises or may represent servers of external vendors that is located in a remote place.

To generate these templates with source addresses that represent that represents the home-domain path files 147, sub-domain path files 149, files in an entire server or a cluster of servers, the intermediate nodes 109 or the support servers 169 identify malware or other notorious content in packets, when they are received. A malware characteristic might comprise one or more payload bit sequences, the existence of which in a packet indicates that at least a portion of a certain malware exists within the packet payload. A malware characteristic might also include source address match with that of a known end point device that repeatedly attempts to spread a malware. Similarly, malware characteristics may include file name text sequences or other payload or supplemental packet field matches that at least suggest that malware may be present. When such a packet sourced from the server 151 arrives at any of the variety of intermediate nodes 109, the packet contents are compared with one or more of primary templates and if a match for a malware occurs, the associated logic is applied. If a malware likelihood is detected during comparison with primary templates, the packet contents are compared with secondary templates and the associated logic are applied, repeatedly until a conclusion is reached. Source addresses from such packets are stored in the form of templates and associated logic is generated. Instead of the above said automatic generation of templates, the templates may also be generated manually by gathering statistics regarding malware and generating templates accordingly.

The quarantine service functions 115 or 171, in conjunction with the communication applications 117, perform variety of predefined tasks, once the source address is identified. For example, the communication applications 117 might communicate a warning to one or both of the end point devices involved in the exchange but continue delivery of the packet. Alternatively, the packet may be discarded with or without the warning. The logic associated with templates vector the packet to one or more of the quarantine service functions 115 or 171 when source address is identified, and the quarantine service functions 115 in turn may perform one or more of the many levels of actions, in stepwise manner. For example, if the violations of the server 151 are of benign nature such as an annoying popup advertisement, then the packet may be discarded with an appropriate warning message regarding the server 151 sent to both the server 151 and the client device 153. Often, such web pages and popup advertisements mislead the users in to clicking on wrong buttons, without being aware of such actions infecting the end point device with malware. At such lowest risk factor levels, quarantine service functions 115 or 171 may take less stringent actions such as not allowing downloading of a webpage, disabling certain aspects of the web pages or disabling popup that mislead users, with or without messages.

When the server 151 attempts to send malware repeatedly, or in case of malware of higher risk levels, the quarantine service function 115 processing may assume rigorous actions such as sending a warning message to the server 151 that informs about interruption in routing, until the malware or other notorious content problem is fixed. This warning message may also include information regarding the assistance available to fix the problem. The users of the server 151 may be able to download quarantine function downloads. Quarantine function downloads available from the external servers 169 or from the intermediate nodes 109, together with messages, allow users of the server 151 and client device to educate themselves as well as fix the malware. These quarantine function downloads are executable or interpretable codes sent to the end point devices with user acceptance, that may be run by the operating system or a browser. Further, in some other cases, such as when a malware introduces serious disruption of functioning of the client device 153, the intermediate nodes 109 may simply replace the malware codes with a known good code and route them to the client device 153, while taking measures against the server 151. Further, extreme end of recourse taken by the intermediate nodes 109 may include quarantining the server itself, which may also be cluster of servers.

The messages sent by the communication applications 117 may include a title such as "Malware Warning!", and a brief description of the type of the malware, sender's and receiver's IP address and/or domain names, type of malware, risk factor and some other details. Further, the message may give a brief description of the situation encountered by the intermediate nodes 109, such as -- "The download webpage/file is being processed for malware, please wait..." or when a malware is detected -- "Sorry, the server may source malware, file/web page can not be downloaded..." or "The file being sent may contain a malware code ...". The message may also include information relating to the risk factors and actions of the malware sourced by the server 151, such as "The following server is known to send - malware 1 «Malware type and Code Number»: with HIGH RISK FACTOR, affects your PC registry and may disable «one or more application related activities>>, malware 2 <<Malware type and Code Number>>: with MEDIUM RISK FACTOR, produces annoying and misleading popup.". The assistance related messages may say "To fix the malware <<malware type and Code Number» from this server, please click following button," and clicking of the button may provide a quarantine function download or may vector the client device 153 to another web site where downloads are available. Similar messages and associated functionality is provided for other types of notorious content.

In situations where the malware codes may attempt to replicate themselves or may attempt to mislead the intermediate nodes 109, the communication applications may employ a mechanism of human challenge. The human challenge may include few digits or alphabets with orientations unlike alphanumeric displays of the computer, and a human user is expected to respond by keying in these alphanumeric characters and give approval for transmission of such packets. This procedure allows transmission of packets that are not necessarily malicious or misleading, but may have similar file names or code segments. Along with the human challenge mechanism, the intermediate network nodes 109 may also collect some user information for further processing, if necessary. Further, intermediate nodes 109 may send messages, information, warning and assistance regarding the malware, together with the challenge mechanism. The information regarding the malware may include server (which may be a server) domain name, IP address, name and code of the malware, the functions of the malware and how if affects the client device, statistics regarding the server (server) and malware, and remedies available to fix the malware.

For example, the server 151 may, according to the statistical data collected by the intermediate nodes 109, be rated as poor in terms of handling the malware codes. The statistical data stored at the intermediate nodes 109 (support server 169) may either be collected via feedback from various users or by analyzing the number of malware violations by the server. Other statistical methods of analyzing and ranking the servers are also contemplated.

The information sent to the client device 153 along with challenge mechanism may also include a provision for user feedback regarding the server 151, links that direct user to useful sites and information about how to set up the browser applications at the client device for future malware protection. Alternatively, upon obtaining response to the human challenge the network nodes 109 may vector the browser to one or more sites that provide necessary information that educates the user and provide assistance to fix the malware. However, if the intermediate nodes 109 determine with certainty that the server 151 sends packets that contain malicious and disruptive codes, then, they may block such transmission and respond appropriately such as interrupting the routing of packets from the server 151 in the future; with or without human challenge mechanism, information, and warning, which are mentioned above.

These intermediate nodes 109, to perform quarantine processing mentioned above, decrypt packets if they are encrypted, and may invoke a local or remote service for such a decryption process. Further, the intermediate nodes 109 accomplish the quarantine processing in such a manner as not to repeat any of these processes along the communication path, that is, from the server 151 to the client device 153. This non-repetitive processing is done by including a comparison table version code in the packets, after the quarantine processing is done. The comparison table version code incorporates information about primary and secondary templates that are compared on the packet, and the quarantine service functionality used on the packet by a previous node. Information contained in the comparison table version code may include the template version, associated logic version, local quarantine service functions version and the quarantine service functions applied locally or remotely. If any of the nodes in the communication path contains an enhanced or a recent version of templates, for example, the node may determine the need of comparison with only those enhanced templates. Similar considerations apply to associated logic and quarantine service functions.

If the comparison table version code does not exist in the packet, then the processing intermediate node determines that packet analysis has not taken place by any of the previous nodes. On the contrary, if the comparison table version code does exist, then the processing intermediate node decodes the code to determine the quarantine processes that have occurred before. Then, if any further quarantine processing is necessary only such processing are done.

If the packets that arrive at a processing intermediate node are encrypted and if further analysis is indicated, then, network node proceeds with decryption of the packet. While the public key may be available from either the server 151 or the client device 153, the private key is known only to the client device 153. Although, the description of (non-repetitive) quarantine processing shows one of the possible embodiments, it is not limited to the described embodiment alone.

**FIG. 2** is a schematic block diagram 205 illustrating functionality of end point devices 207, 233 and intermediate packet pathway nodes 221 of the communication infrastructure of **FIG. 1,** according to the present invention. Specifically, when a server 207 (may also be a server clusters) sends a packet 211 into an Internet network, one or more of intermediate packet pathway nodes 221 begin a stream of analysis 223 and processing. The packet after successful completion of this stream of analysis and processing (quarantine processing, hereafter) is routed 231 to a client device 233 along with messages, which may be a personal computer, handheld device or phone. Alternatively, upon detection of a source address that sends packets with a malware or other notorious content characteristic in the packet during analysis 225, 227, the quarantine processing 229 leads to a series of actions such as dropping the packets, sending messages and quarantining the server 207.

Analysis of the arriving packet at the intermediate nodes 221 begins by comparing the packet contents, with a plurality of primary templates. By such primary template comparisons 225, the intermediate nodes 221 determine source address of the servers. When a match occurs, the intermediate nodes 221 apply logic associated with the primary templates 225. This, in turn, leads to secondary template comparisons 227, where the packet contents are compared with a selected group of secondary templates. Then, the logic associated with secondary templates is applied. The process of secondary template comparisons and applying associated logic is repeated until a conclusion regarding source address sourcing malware or other notorious content has been made.

Once source address is identified as sourcing malware or other notorious content, the quarantine processing 229 begins. Here, the quarantine service function processing is applied. Further, the intermediate nodes 221 insert a quarantine status in an entry table that includes home-domain path addresses 265, sub-domain path addresses 275, address of an entire server or a cluster of servers, site path, risk factor etc. In general, such a table may include: (a) source address that represents a home-domain path address; (b) source address that represents a sub-domain path address; (c) source address that represents an individual server; (d) source address that represents an entire physical server having multiple addresses; (e) communication pathway associated with the source end point device; (f) risk level indication of the malware; and (g) quarantine status indications. In addition, quarantine status in the table may be edited and new entries may be added by a system administrator or via software interaction with a trusted third party, such as an employee of a malware removal company, police or other authority.

The quarantine status indications further leads to a series of actions that may include, but not limited to: (a) altering or dropping the packet; (b) sending appropriate warning, information or assistance related messages to the end point devices 207, 233 with a challenge mechanism for the users; (c) interrupting routing services to the server 207; (d) providing assistance to the end point devices 207, 233 to fix the malware; and (e) directing users to sites that provide additional information and assistance. Alternatively, if quarantine service functions are not available at the intermediate nodes 221, the packet may be vectored to support servers 215 for external quarantine service function 217 processing. Other external service functions 219 available at the support servers 215 may also be utilized. The end point devices 207, 233 may include additional software components such as BA (Browser Applications) that is capable of executing or interpreting downloaded QFDs (Quarantine Function Downloads), CP (communication pathway) and CA (communication Applications). The communication applications allow messages and human challenge to be displayed on the screen, such as a popup, without a browser.

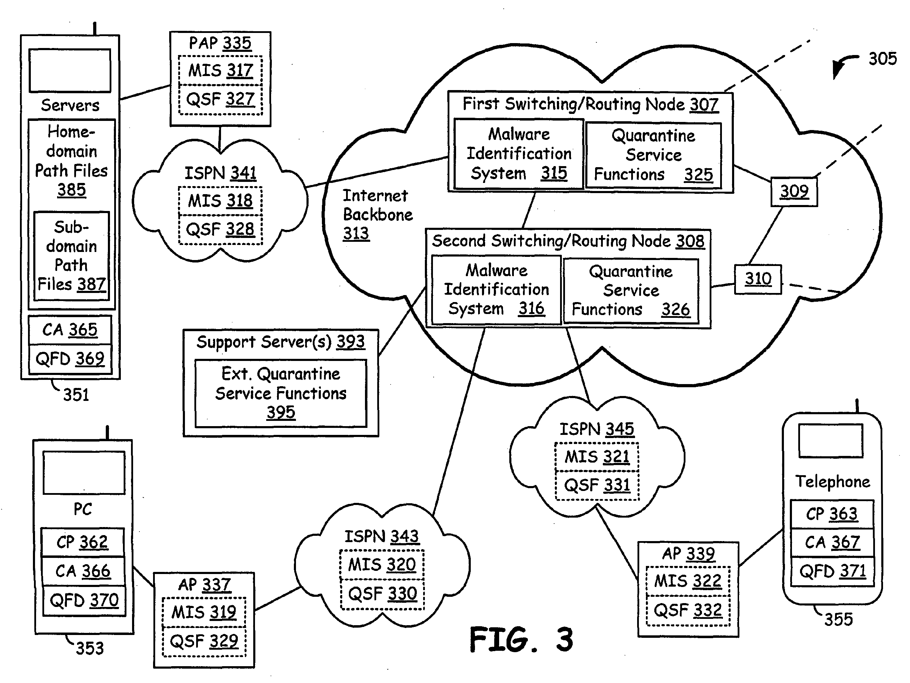

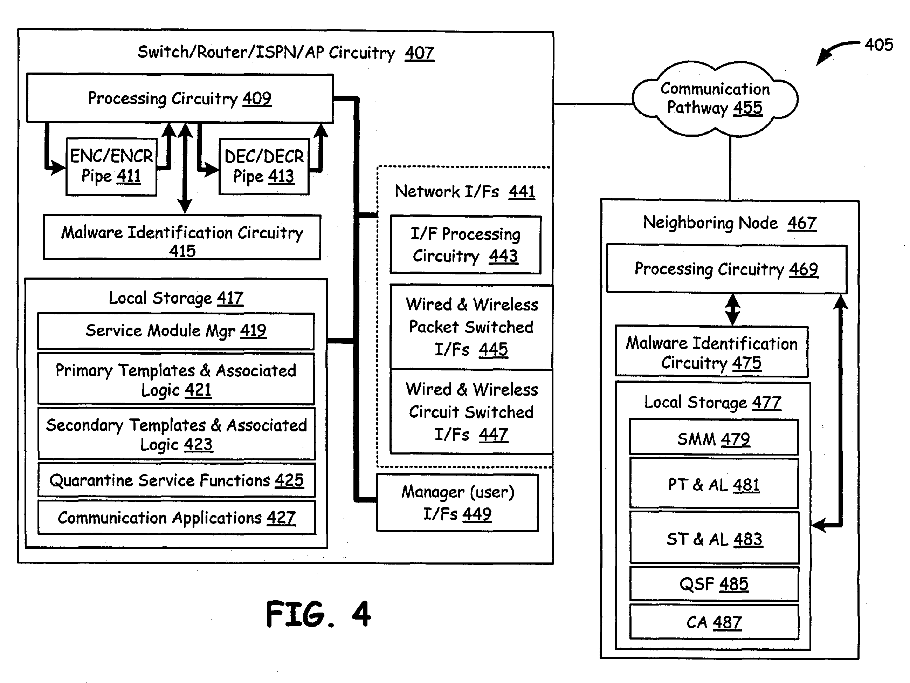

**FIG. 3** is a schematic block diagram 305 of an embodiment of the communication infrastructure of **FIG. 1,** illustrating further detail of the end point devices, intermediate packet pathway nodes and server or server clusters. In accordance with the present invention, intermediate switching/routing nodes 307 through 310 that are present in the Internet backbone 313 contain Malware Identification System (MIS) 315, 316 and Quarantine Service Functions (QSF) 325, 326 that help detect servers that send malware and perform quarantine processing. Similarly, other intermediate nodes such as Personal Access Point (PAP) 335, Access Points (AP) 337, 339, Internet Service Provider's Networks 341, 343 and 345 also contain MIS 317 through 322 and QSFs 327 through 332. The functional blocks that make up MIS 315 through 322 are described in detail with reference to the **FIGs. 4, 5** and **6.**

Further, as illustrated, communicatively coupled to one or more of the intermediate nodes 309 through 310 are support servers 393 that provide additional external quarantine service functions 395, and add to the quarantine processing ability of switching/routing nodes 307 through 310. These support servers 393 may represent a server communicatively coupled to the intermediate nodes residing at the same premises, or may represent servers of external vendors that is located in a remote place

The end point devices may include a server 351, personal computer 353, or telephone 355 that utilize the networking services of intermediate nodes 307 through 310, 335, 337, 339, 341, 343, and 345 to exchange data, audio or video packets. These end point devices 351, 353 and 355 further contain downloaded QFDs (Quarantine Function Downloads) 369 through 371, CP (communication pathway) 361 through 363 and CA (communication Applications) 365 through 367. The software components assist the intermediate nodes 307 through 310, 335, 337, 339, 341, 343 and 345 in quarantine processing, as described with reference to the **FIGs. 1** and **2.**

**FIG. 4** is a schematic block diagram 405 illustrating a network node (switch/router/ISPN/AP) 407 constructed in accordance with the embodiments of **FIGs. 1** and **3** of the present invention. Further, the illustration shows a communication pathway 455 that communicatively couples the network node 407 to a neighboring node 467, which has similar quarantine processing capabilities. The network node circuitry 407 may represent any of the Internet nodes that route data packets and the circuitry may in part or full be incorporated in any of the network devices such as a switch, router, an ISPN, or an access point. The network node circuitry 407 generally includes processing circuitry 409, local storage 417, manager interfaces 449 and network interfaces 441. These components communicatively coupled to one another via one or more of a system bus, dedicated communication pathways, or other direct or indirect communication pathways. The processing circuitry 409 may be, in various embodiments, a microprocessor, a digital signal processor, a state machine, an application specific integrated circuit, a field programming gate array, or other processing circuitry. The processing circuitry 409 is communicatively coupled to an encoding/encryption pipe 411, a decoding/decryption pipe 413 and malware identification circuitry 415. These hardware components 411, 413 and 415 may be hardwired to increase the speed of quarantine processing and routing.

Local storage 417 may be random access memory, read-only memory, flash memory, a disk drive, an optical drive, or another type of memory that is operable to store computer instructions and data. The local storage 417 contains Service Module Manager (SMM) 419 that analyses incoming packets by comparing the header contents and payload contents with appropriate templates. These templates and associated logic include primary templates and associated logic 421, secondary templates and associated logic. If any match is found during the primary template comparison, the associated logic 421 directs the packets to selected groups of secondary templates 423 for further analysis and after secondary template comparison, the logic associated with secondary templates is applied. This process is repeated until a conclusion is reached. Then, appropriate quarantine service functions 425 or remote quarantine service functions are applied. The communication applications 427 allow messages and human challenge to be displayed on the screen, such as a popup, without a browser.

Further, the network interfaces 441 contain wired and wireless packet switched interfaces 445, wired and wireless circuit switched interfaces 447 and further the network interfaces 441 may also contain built-in or an independent interface processing circuitry 443. The network interfaces 441 allow network devices to communicate with other network devices and allow processing circuitry 409 to receive and send packets, which may contain malware code sequences. Further, the network interfaces 441 allow utilization external quarantine service functions for analysis and processing, when such functions are not available in the local storage 417. The manager interfaces 449 may include a display and keypad interfaces. These manager interfaces 449 allow the user at the network exchanges to control aspects of the present invention.

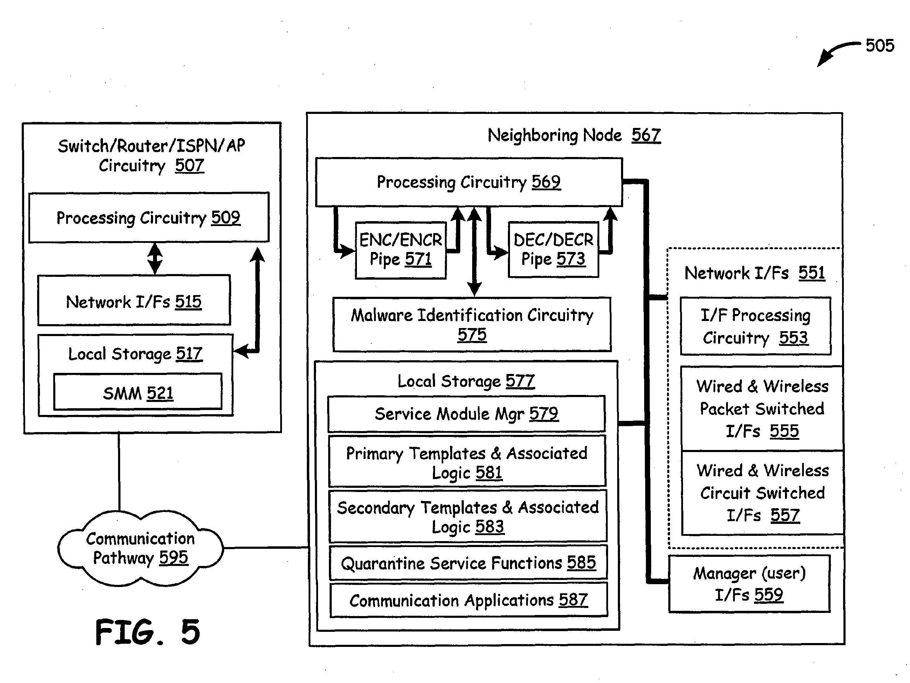

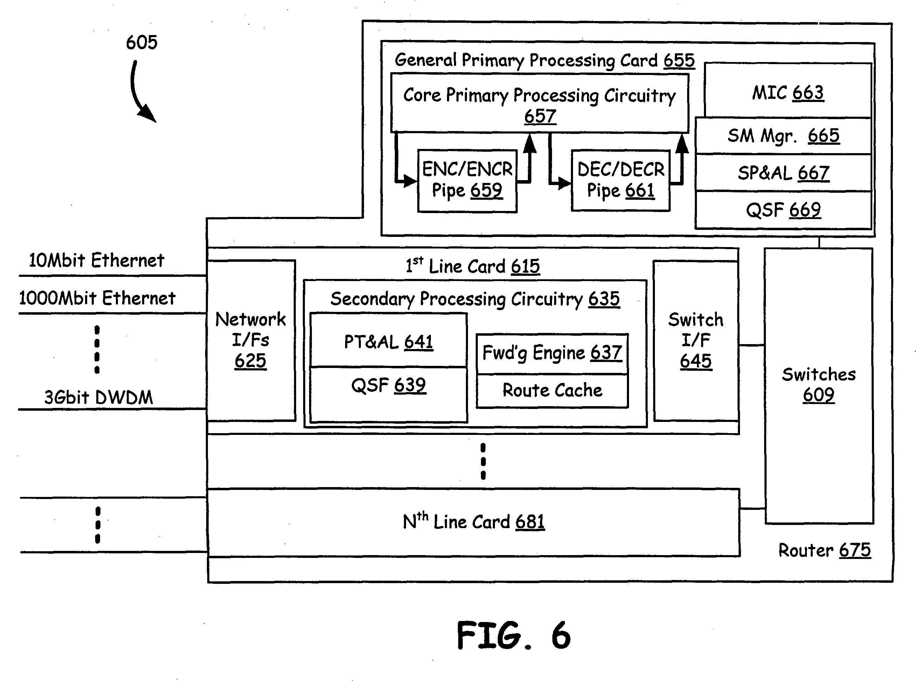

In other embodiments, the network node 407 of the present invention may include fewer or more components than are illustrated as well as lesser or further functionality. In other words, the illustrated network device is meant merely to offer one example of possible functionality and construction in accordance with the present invention. Other possible embodiments of network nodes are described with reference to the **FIGs. 5** and **6.**

The network node 407 is communicatively coupled to external network devices, such as neighboring node 467 or support servers (not shown), via communication pathway 455. The neighboring node 467 may also consist of elements of present invention such as malware identification circuitry 477, SMM (Service Module Manager) 479, PT & AL (Primary Templates and Associated Logic) 481, ST & AL (Secondary Templates and Associated Logic) 483, QSF (Quarantine Service Functions) 485 and CA (Communication Applications) 487. Further, the neighboring node 467 may have other components of the network node 407 such as an encryption pipe and decryption pipe (not shown).

The network node 407 begins analysis by comparing the packet contents, with a plurality of primary templates. By such primary template comparisons, the node 407 determines if the source address in the packet is any of the servers known to send malware. When a match occurs, the node 407 applies logic associated with the primary templates. This, in turn, leads to secondary template comparisons, where the packet header and payload contents are compared with a selected group of secondary templates. Then, the logic associated with secondary templates is applied. The process of secondary template comparisons and applying associated logic is repeated until a conclusion regarding the source address is arrived. Once the source address is confirmed to be server that is known to send malware, the quarantine processing begins. Here, the quarantine service functions are applied on the packet, by utilizing locally available quarantine service functions 425 or externally available QSFs such as the QSF 485, by vectoring the packet to the neighboring node 467. Further, the node 407 inserts a quarantine status indication in an entry table that includes entire IP address or entire physical server having multiple IP addresses, site path, risk factor etc. The quarantine status indications may include altering or dropping the packet, sending appropriate warning, information or assistance related messages to the end point devices with a challenge mechanism for the users and providing assistance to the end point devices to fix the malware. Alternatively, if quarantine service functions are not available at the node 407, the packet may be vectored to an external vendor's server for external quarantine service function processing.

**FIG. 5** is another schematic block diagram 505 illustrating a network node (switch/router/ISPN/AP) 507 not equipped with components of present invention interacting with a neighboring node 567 to accomplish quarantine service function processing. The network node 507, which may be legacy equipment, contains processing circuitry 509, network interfaces 515, and local storage 517. This node 507 is communicatively coupled to the neighboring node 567 via a communication pathway 595. The neighboring node 567 contains at least some of the components of the present invention illustrated in **FIG. 4.** Neighboring node 567 illustrated here includes processing circuitry 569, local storage 577, manager interfaces 569 and network interfaces 551. Hardwired components of the neighboring node 567 include encoding/encryption pipe 571, decoding/decryption pipe 573, malware identification circuitry 575. Further, the network interfaces 551 contain wired and wireless packet switched interfaces 555, wired and wireless circuit switched interfaces 557 and further the network interfaces 551 may also contain built-in or an independent interface processing circuitry 553. The local storage 577 contains Service Module Manager (SMM) 579, primary templates and associated logic 581, secondary templates and associated logic 583, quarantine service functions 585 and communication applications 587.

However, the network node 507 is not equipped with any of the components of the present invention, but may contain a service module manager 521. When a packet arrives at the node 507, the service module manager 521 vectors the packet to the neighboring node 567, with encapsulated instructions to quarantine process the packet and return it back to the node 507. The neighboring node 567 quarantine processes the packet in a way that is consistent with descriptions of node 407 in **FIG. 4**, and returns the packet to the node 507. The node 507 then routes the packet toward destination device. Thus, the network node 507 accomplishes quarantine processing of the packet by merely vectoring the packet to a neighboring node 567, and receiving back a processed packet.

**FIG. 6** is a schematic block diagram 605 illustrating a router 675 constructed in accordance with the embodiments of **FIGs**. **1** and **3** of the present invention. The router 675 may be a packet switching exchange or access point. For example, the router circuitry 675 may refer to any of the network nodes present in the Internet backbone 313 described with reference to the **FIG. 3**. The router circuitry 607 generally includes general primary processing card 655, switches 609 and plurality of line cards 615 and 681. The line cards 615 and 681 may all be different in certain cases.

The first line card 615 consists of network interfaces 625 capable of interfacing with wired and wireless networks such as 10Mbit, 1000Mbit Ethernet networks and 5Gbit DWDM (Dense Wavelength Division Multiplexing) fiber optic networks. The first line card 615 also contains switch interfaces 645 that allow the card to interface with interconnecting switches 609. Further, the first line card 615 consists of secondary processing circuitry 635, which preprocesses the packets before interconnecting switches 609 route the packets. The secondary processing circuitry 635 contains forwarding engine 637 and route cache. The secondary processing circuitry 635, in addition to preprocessing the packets, also contains PT & AL (Primary Templates and Associated Logic) 641. The incoming packets are initially compared with primary templates and associated logic is applied. If a match occurs, quarantine service functions 639 locally available may be used to preprocess the packets.

The general primary processing card 655 further consists of core primary processing circuitry 657, which is communicatively coupled to an encoding/encryption pipe 659 and a decoding/decryption pipe 661. The general primary processing card 655 also contains service module manager (SMM) 665, SP & AL (Supplementary Templates and Associated Logic) 667 and QSF (Quarantine Service Functions) 669. The SMM 665 in conjunction with SP & AL 667 and QSF 669 perform secondary quarantine analysis and processing, if vectored by the first line card 615.

The SMM 665 performs source address detection and processing functions by comparing the incoming packet payloads with SP & AL 667 and applying appropriate quarantine service functions 669 indicated in the logic of the supplementary templates. The quarantine service function processing involves, upon detection of the source address, sending messages with a human challenge to the respective end point devices. The message may be a pop up message that appears on the monitors of the end point devices, such as the personal computer, server, or telephone described with reference to the **FIG. 3**. The message may include a title such as "Notorious Content Warning!", and a brief description of a type of malware, sender's and receiver's IP address, type of malware, risk factor and some other details. Further, the SP & AL 667 and QSF 669 may provide space for external vendor's templates and quarantine service modules.

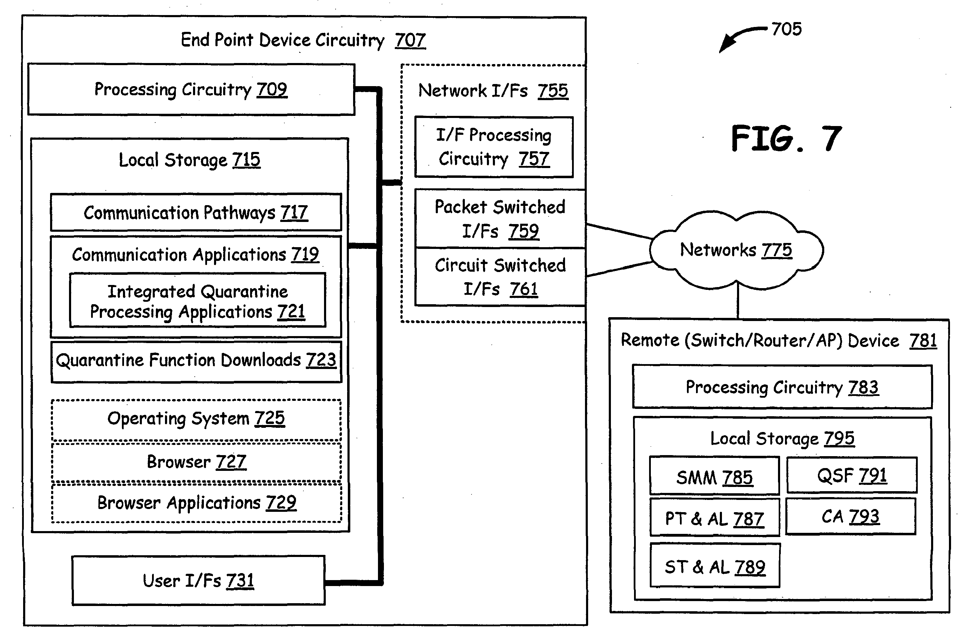

**FIG. 7** is a schematic block diagram 705 illustrating end point devices (servers and/or clients) 707 constructed in accordance with the embodiments of **FIGs. 1** and **3** of the present invention. The end point device circuitry 707 may refer to any of the device circuitry from which packets, encrypted or not and may contain portions of malware or other notorious content code segments, originate and/or terminate, and the circuitry may in part or full be incorporated in any of the end point devices described with reference to the **FIGs. 1** and **3.** The end point device circuitry 707 generally includes processing circuitry 709, local storage 715, user interfaces 731, and network interfaces 755. These components communicatively coupled to one another via one or more of a system bus, dedicated communication pathways, or other direct or indirect communication pathways. The processing circuitry 709 may be, in various embodiments, a microprocessor, a digital signal processor, a state machine, an application specific integrated circuit, a field programming gate array, or other processing circuitry.

The network interfaces 755 may contain wired and wireless packet switched interfaces 759, wired and wireless circuit switched interfaces 761 and the network interfaces 755 may also contain built-in or an independent interface processing circuitry 757. The network interfaces 755 allow end point devices to communicate with any other end point devices. The user interfaces 731 may include a display and keypad interfaces.

Local storage 715 may be random access memory, read-only memory, flash memory, a disk drive, an optical drive, or another type of memory that is operable to store computer instructions and data. The local storage 715 includes communication pathway 717, communication applications 719 and quarantine function downloads 723. Further, the local storage 715 may contain browser applications 729, and an operating system 725 and browser 727. The browser applications 729 are capable of executing or interpreting downloaded quarantine function downloads 723 that help educate the users about malware and fix malware related problems. These downloads 723 may be made available by the network nodes when they detect a malware code segment in a packet that either originate or destined to the end point device circuitry 707. The communication applications 719 allow messages and human challenge to be displayed on the screen, such as a popup, without a browser.

In other embodiments, the end point device circuitry 707 of the present invention may include fewer or more components than are illustrated as well as lesser or further functionality, and may adapt to the data packets exchange functionality rather than voice packets exchange. In other words, the illustrated end point device is meant merely to offer one example of possible functionality and construction in accordance with the present invention.

The end point device 707 is communicatively coupled to external network devices, such as remote device 781, via networks 775. The external network device 781 may also consist of elements of present invention such as processing circuitry 783 and local storage 795 consisting , SMM 785 and PT & AL 787, ST & AL 789, QSF 791 and CA 793 among other functional blocks of the present invention. The server or client devices typically communicate with each other by exchanging packets. These packets may contain malware code segments that may be intentional or otherwise. When a network node, such as remote device 781 detects the source address it takes one of many possible steps. These steps may include altering or dropping the packet, sending appropriate warning, information or assistance related messages to the end point devices with a challenge mechanism for the users and providing assistance to the end point devices to fix the malware. These functionalities are achieved by remote device 781 components 785, 787, 789, 791, and 793 working together with end point device circuitry 707 components 717, 719, 721, 723, 725, 727, and 729.

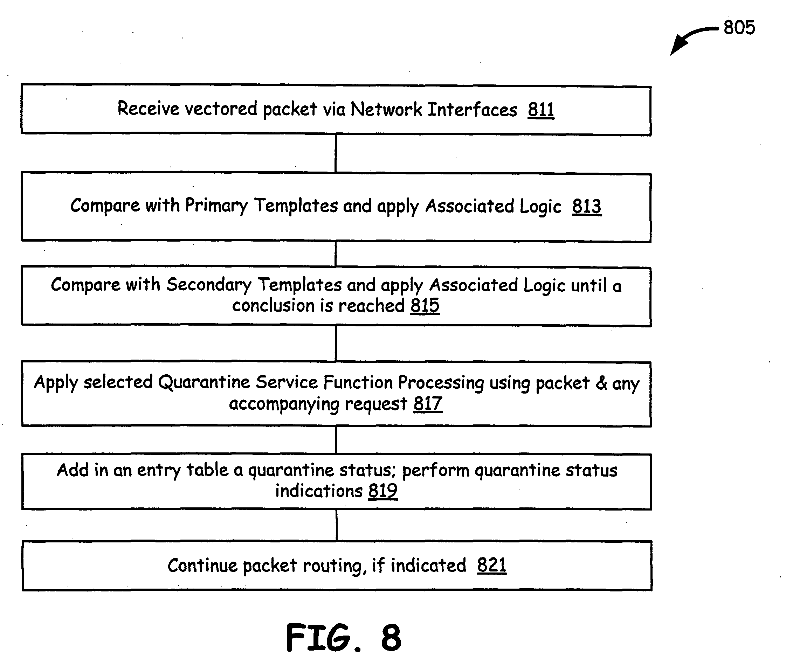

**FIG. 8** is a flowchart 805 illustrating a typical flow of functionality of network devices of **FIGs. 4, 5** and **6** when processing malware, according to one embodiment of the present invention. Although directed to malware, the flow generally applies to all types of notorious content. In particular, at block 811, the network device receives a vectored packet via network interfaces. At a next block 813, the network device compares the packet with primary templates and applies associated logic. The primary templates may contain header templates and payload templates. When a packet arrives at the network device, the packet is compared with the primary templates. If a match occurs with a template that targets the source address of a notorious server, quarantine service functionality may be immediately triggered. If the source is not notorious but merely contains notorious content, matching a secondary template may be warranted as indicated at a next block 815. Therein, the network device compares the packet with at least one secondary template, as directed by the associated logic of the matching primary template. If no match occurs, process of attempting to match the remaining primary templates may continue. If a match does occur with the at least one secondary template, the logic a conclusion that the packet is associated with notorious content is reached.

In response to a match, at a next block 817, selected quarantine service function processing is applied. In other words, once the source address is confirmed to be the one that sends malware or is associated with other notorious content, the quarantine processing begins. Quarantine service function processing is applied by utilizing locally available quarantine service functions and/or remote quarantine service functions.

Then, at a next block 819, the network device inserts a quarantine status in an entry table that includes home-domain path addresses, sub-domain path addresses, addresses of an entire server or a cluster of servers, site path, risk factor etc. In general, such a table may include: (a) source address that represents a home-domain path address; (b) source address that represents a sub-domain path address; (c) source address that represents an individual server; (d) source address that represents an entire physical server having multiple addresses; (e) communication pathway associated with the source end point device; (f) risk level indication of the malware; and (g) quarantine status indications. The quarantine status indications further leads to a series of actions by the network device that may include altering or dropping the packet, sending appropriate warning; information or assistance related messages with a challenge mechanism, interrupting routing services, providing assistance to the end point devices to fix the malware and directing users to sites that provide additional information and assistance. Then, if indicated in the quarantine status indications, the packet is routed toward destination device, at a next block 821.

As referred to herein, a "matching a template" actually refers to matching the logic associated with the template. For example, logic may indicate a successful match if the template finds correlation, or, on the contrary, if the template does not correlate. Logic may be more complex, e.g., requiring correlation with a primary and a first secondary template, while not correlating with a third secondary template. The flow chart illustrated is merely a simplification of possible flow.

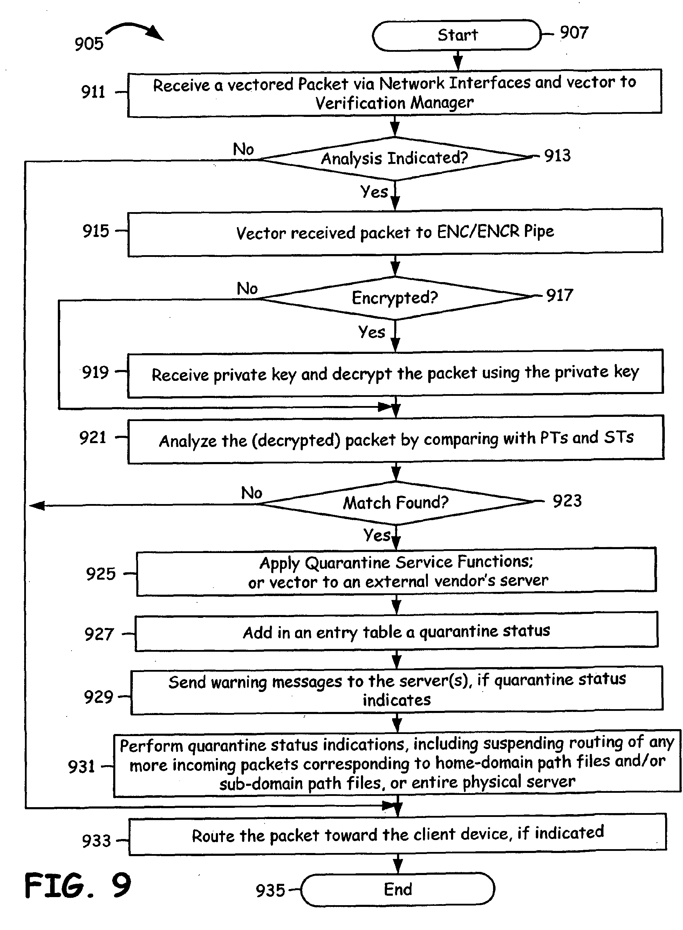

**FIG. 9** is a flowchart 905 illustrating more detailed functionality of one embodiment of the network device of **FIGs. 4, 5** and **6.** The detailed functionality of the network device begins at a block 907. At a block 909, the network device receives a vectored packet via network interfaces, and it is vectored to a verification manager unit. The verification manager verifies whether quarantine processing is performed by the previous nodes that participate in routing of the packet along the communication pathway between source and destination end point devices. At a next decision block 913, the network device determines if any further analysis is indicated. If no, the network device routes the packet at a block 933 and the functionality ends at a next block 935.

If the verification manager determines that further processing is necessary at the decision block 913, then at a next block 915, the packet is vectored to the encoding/encryption pipe. At a next decision block 917, the encoding/encryption pipe determines if the packet is encrypted and if so, at a next block 919, the network device receives corresponding private key and decrypts the packet. If not at the decision block 917, the network device skips the step of block 919. At a next block 921, the network device analyzes the packet by comparing the header and payload contents with the primary and secondary templates and applies logic associated with them.

At a next decision block 923, the network device determines if a match is found during these primary and secondary template comparisons, if no matches are found, the network device routes the packet at the block 933 and the functionality ends at the next block 935. If a match is found at the block 923, then, at a next block 925, the network device applies quarantine service functions, or alternatively may vector the packet to an external device for this purpose. At a next block 927, the network device adds quarantine status in the entry table. At a next block 929, the network device sends warning messages to the server depending on the quarantine status in the entry table. Then, the network device performs quarantine status indications, including interrupting routing of any more incoming packets from the corresponding IP address (that is, home-domain path addresses, sub-domain path addresses, addresses of an entire server or a cluster of servers); at a next block 931. Then, at the next block 933, if the quarantine status indicates, the network device routes the packet, and the functionality ends at the next block 935.

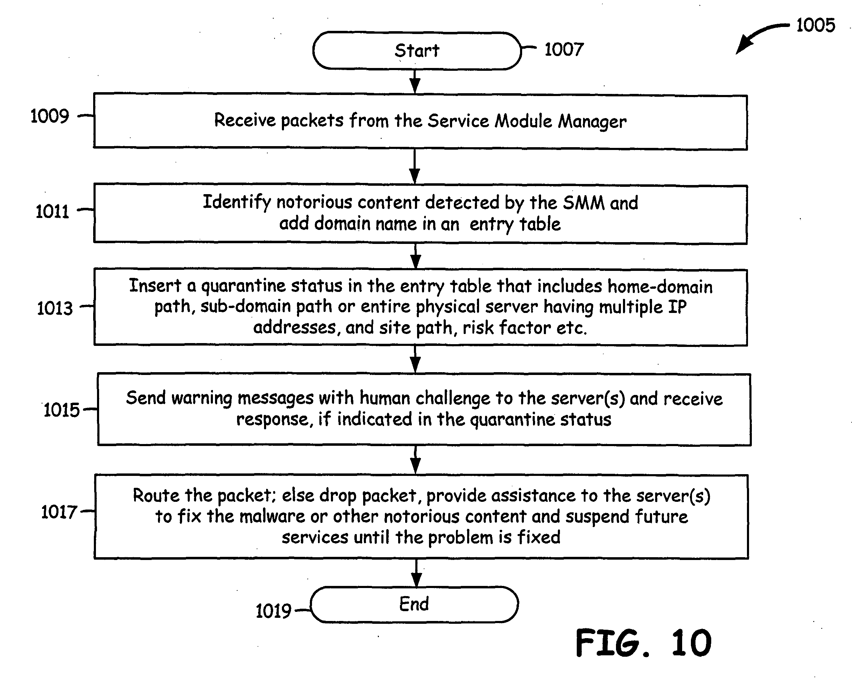

**FIG. 10** is a flowchart 1005 illustrating functionality of malware identification circuitry, in one embodiment of the network device of **FIGs. 4, 5** and **6.** The functionality of malware identification circuitry (MIC), which can be extended to identify any type of notorious content, begins at a block 1007. At a block 1009, the MIC receives packets from the SMM. At a block 1011, the MIC identifies source address detected by the SMM and adds the source address to an entry table. At a next block 1013, the MIC inserts a quarantine status in the table for the entry that may include home-domain path addresses, sub-domain path addresses, addresses of an entire server or a cluster of servers, site path, and risk factor among other entries.

Then, at a next block 1015, the MIC sends warning messages with a challenge for the user to the source device and receives response, if such an action is indicated in the quarantine status. At a next block 1017, the MIC forwards packet to another unit for routing. If further routing is not indicated, the MIC drops the packet, provides assistance to the source device to fix malware, and interrupts further routing of packets from the source address until the problem is fixed. The functionality ends at a next block 1019.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A communication infrastructure that routes a packet from a source device toward a destination device, the source device having a domain name and a current network address, the communication infrastructure comprising:
a domain name server that associatively stores the domain name and the current network address of the source end point device;
an intermediate routing node;
a plurality of templates stored on the intermediate routing node, a first of the plurality of templates being updated from the associative storage of the domain name server using the domain name of the source device, the first of the plurality of templates targeting the current network address of the source device;
a quarantine service function;
the intermediate routing node, after receiving the packet originating from the source device, successfully matches the packet with the first of the plurality of templates; and
the intermediate routing node responds to the successful matching by triggering the quarantine service function.

2. The communication infrastructure of claim 1, wherein the source device comprising a notorious server, and the first of the plurality of templates targeting the notorious server by targeting the current network address.

3. The communication infrastructure of claim 1, wherein the source device is a server cluster.

4. The communication infrastructure of claim 1, wherein the quarantine service function delivers a human challenge.

5. An intermediate routing node in a communication infrastructure that supports packet switched communication from a source device toward a destination device, the source device having a network identifier, the source device having notorious content, the communication infrastructure comprising:
a communication interface;
storage containing a plurality of templates;
a first of the plurality of templates targeting at least a portion of the network identifier;
processing circuitry, coupled to the storage and to the communication interface, that, during a comparison of a packet received from the source device via the communication interface, matches the packet with the first of the plurality of templates; and
the processing circuitry, at least in part based on the matching, responds by triggering a quarantine function.

6. The intermediate routing node of claim 5, wherein the intermediate routing node comprising a router.

7. The intermediate routing node of claim 5, wherein the intermediate routing node comprising an access point.

8. The intermediate routing node of claim 5, wherein the processing circuitry responds by triggering the quarantine function based on matching both the first of the plurality of templates and a second of the plurality of templates, the second of the plurality of templates targeting at least a portion of a uniform resource locator.

9. A method performed by an intermediate network node in a packet switched communication pathway, the intermediate network node being communicatively coupled between a source device and a destination device, the source device having a network identifier and notorious content, the method comprising:
receiving a packet that contains the network identifier;
comparing the packet with a plurality of templates;
matching at least a portion of the packet with a first of the plurality of templates;
responding, based at least in part on the matching, by triggering a quarantine function.

10. The method of claim 9, further comprising executing at least a portion of the quarantine function locally.
